(19) Europäisches Patentamt
European Patent Office
Office européen des brevets

(11) Publication number: **0 057 020**
**B1**

(12) **EUROPEAN PATENT SPECIFICATION**

(45) Date of publication of patent specification: **28.08.85**

(51) Int. Cl.4: **C 09 B 29/01**, C 09 B 41/00

(21) Application number: **82100589.9**

(22) Date of filing: **28.01.82**

(54) **Preparation of azo pigments.**

(30) Priority: **28.01.81 US 229305**
**26.08.81 US 296371**

(43) Date of publication of application:
**04.08.82 Bulletin 82/31**

(45) Publication of the grant of the patent:
**28.08.85 Bulletin 85/35**

(84) Designated Contracting States:
**AT BE CH DE FR GB IT LI NL SE**

(56) References cited:
**DE-A-2 220 029**
**FR-A-1 449 989**
**FR-A-2 163 614**
**FR-A-2 167 792**
**GB-A- 875 882**

**CHEMICAL ABSTRACTS, vol. 65, no. 9, 24th October 1966, column 13847 c,d,e, Columbus Ohio (USA); W. KULLICK: "An unusual diazo-coupling reaction"**

(73) Proprietor: **Heubach, Inc.**
**Heubach Avenue**
**Newark, N.J. 07114 (US)**

(72) Inventor: **Toji, Masuo**
**Box 110, R.D. 2**
**Sewell New Jersey 08080 (US)**
Inventor: **Bruno, Salvatore Anthony**
**2615 Pin Oak Drive The Timbers**
**Wilmington Delaware 19810 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 057 020 B1

**Description**

*Background of the Invention*

Field of the Invention

The present invention relates to the preparation of azo pigments derived from certain anthranilamides by an in situ diazotization-coupling process.

Prior Art

There are numerous patents which disclose azo pigments having a carboalkyl group ortho to the azo group.

A one-step process for the preparation of azo dyes is disclosed in U.S. 3,793,305.

Anthranilamide has been diazotized and coupled with active methylene componds previously. Very strong acid (10 N hydrochloric acid) was used as the diazotizing medium. This is disclosed in "Triazines and Related Products, Part XIV, Decomposition of 1,2,3-Benzotriazin-4(3H)-ones in the Presence of Reactive Methylene Systems", J. Chem. Soc., Perkin I, 1974 pp 2482—2486.

Summary of the Invention

The present invention relates to azo pigments of the general structure

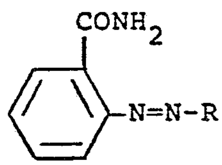

wherein R has the meaning defined below. These pigments cannot be prepared by the conventional technique of diazotization followed by coupling because when an o-aminobenzamide (anthranilamide) is treated with a nitrite the following reaction takes place.

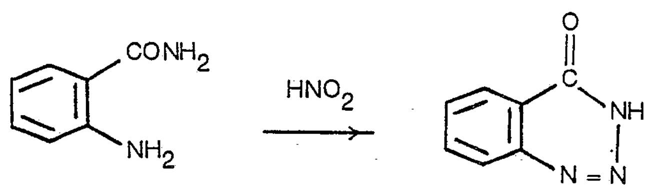


I II

The cyclic triazine, II, does not undergo azo coupling reactions. As a result, azo compounds having an ortho carboxamide group are rare in the art. In the process of the present invention and diazotization is done in situ with the coupling reaction so that the cyclic triazine, II, is not formed.

It is confirmed by Kullick, Angew. Chemie Intern. Ed., Engl. 5 (7) 675 (1966) that the present pigments cannot be prepared by the conventional technique of diazotization. DE—A—2 220 029 and FR—A—2 163 614 do not make the present process obvious either.

Detailed Description

The present invention relates to a process for producing an azo pigment having the formula

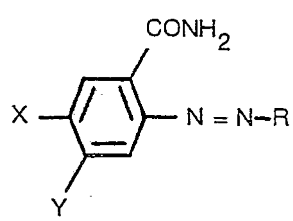

wherein X and Y are the same or different and are selected from the group consisting of —H, —$R^1$, —$OR^1$, —Cl, —$CONH_2$, —$NO_2$ and —$SO_2NH_2$ where —$R^1$ is lower alkyl; and —R is

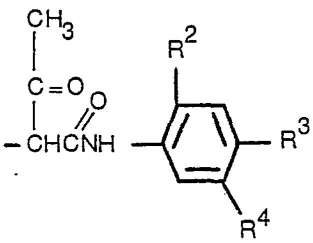,

where $—R^2$, $—R^3$ and $—R^4$ are the same or different and are selected from the group consisting of —H, $—OR^1$, $—R^1$, and —Cl;

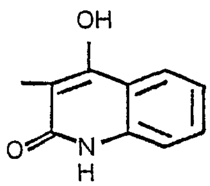 and 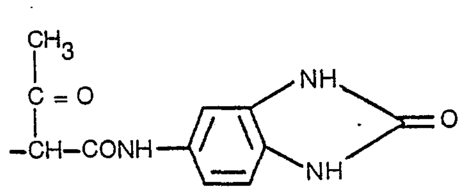,

comprising an in situ diazotization and coupling reaction wherein an anthranilamide of the formula

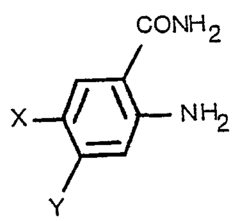

wherein X and Y are defined as above; is reacted with a coupler, RH, wherein R is defined as above, in the presence of a diazotization agent and an acid in a liquid medium comprising of water and, optionally, a polar organic solvent at a pH from 1.0 to 7.0 at a temperature from 0°C to 100°C.

Azo pigments having a carboalkyl group (IIIa) ortho to the azo group are known. The corresponding pigments of the present invention with an ortho carboxamide group (IIIb) invariably exhibit improved bleedfastness and usually improved lightfastness

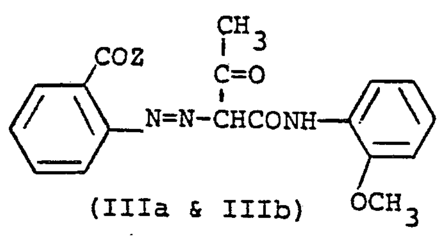

(IIIa & IIIb)

| | Z | Solubility in o-dichlorobenzene g/l at 100°C | Fadeometer lightfastness |
|---|---|---|---|
| IIIa | $—OCH_3$ | 52 | <200 hrs. |
| IIIb | $—NH_2$ | 1.9 | >800 hrs. |

As a measure of the bleedfastness, the solubility of the pigments is shown. Pigment IIIb is less soluble than pigment IIIa by a factor of 25. The fadeometer lightfastness of pigment IIIb is greater than 800 hours without exhibiting a break while that of IIIa is less than 200 hours.

As compared with similar pigments having the carboxamide group in the meta or para position, the ortho carboxamide pigments of the present invention generally exhibit superior lightfastness.

The pigments of the present invention are prepared by an in situ diazotization-coupling reaction wherein an optionally substituted anthranilamide and coupler are reacted in a medium comprising a diazotization agent, acid, water, and, if necessary, an organic solvent. The acid may be an organic acid such as, but not limited to, formic acid, acetic acid, propionic acid, hydroxyacetic acid, tartaric acid or axalic acid,

or it may be mineral acid such as, but not limited to, hydrochloric acid, hydrobromic acid, sulfuric acid, or phosphoric acid. The medium may be buffered at an optimum pH for the particular combination of anthranilamide and coupler by the additional use of a base such as sodium hydroxide, potassium hydroxide, lithium hydroxide, pyridine, or picoline. If the reaction is carried out by slowly adding the diazotization agent to the reaction mass, it is preferred to buffer the reaction mass at pH 1.0 to 5.5. On the other hand, the reaction may be affected by slowly adding the acid to the mixture of optionally substituted anthranilamide, coupler, water, diazotization agent and optional organic solvent. In this latter case, the pH may range from 8.0 at the start, down to pH 1.0 at the completion of reaction.

The preferred diazotization agent is sodium nitrite. However, a lower alkyl nitrite may also be used as the diazotization agent.

Generally the reaction will be carried out at from 0° to 100°C with from 10° to 50°C being the preferred range.

The amount of water in the solvent-acid-buffer system generally will be from 10 to 90% by weight. The amount of acid present in the solvent-acid-buffer system generally will be from 5 to 90% by weight.

If the anthranilamide or coupler are insoluble in the aqueous acid-buffer system a polar organic solvent should be added to the system. Suitable polar organic solvents include but are not limited to dimethylformamide, dimethylacetamide, N-methylpyrrolidone, methanol, ethanol and isopropanol.

The crude pigments may be heat treated to develop their optimum properties. The pigments may be heated in an organic solvent such as dimethylformamide, dimethylacetamide, chlorobenzene, o-dichlorobenzene, or ethyleneglycol monoethylether to name a few. The pigment may be heat treated in water at elevated temperature with or without additional solvents, and with or without auxiliary agents to control the paticle size.

The pigments of this invention are eminently suitable for the coloration of paints, lacquers, varnishes, natural and synthetic polymers, and inks. The good fastness properties of these pigments renders them suitable for the coloration of surface coatings such as thermosetting and thermoplastic acrylics, and alkyd resins, for example. The excellent thermal stability of these pigments makes them suitable for the mass coloration of plastics such as polyolefins, polystyrenes, polyvinyls, polyacrylic acid esters, polyamides, polyurethanes, and silicone resins.

Description of the Preferred Embodiments

Example 1

To a mixture of 3.4 g anthranilamide, 5.2 g acetoacet-o-anisidine, 40 ml glacial acetic acid, 30 ml of water and 10 g sodium acetate, is slowly added 5.5 ml 30% aqueous sodium nitrite over a two hour period at 20°—25°C. The mixture is stirred for an additional hour and then filtered. The solids are washed with water and dried. The resulting green shade yellow pigment is obtained in good yield. The pigment has the formula

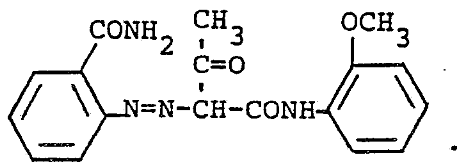

The pigment is dispersed in a thermoplastic acrylic lacquer wherein it displays excellent lightfastness. The pigment also displays utility in the coloration of plastics due to its good heat stability.

Example 2

To a mixture of 4.5 g of aminoterephthalamide, 5.2 g of acetoacet-o-anisidide, 25 ml dimethylformamide, 15 ml glacial acetic acid, and 5.0 ml pyridine, is slowly added 5.5 ml of 30% aqueous sodium nitrite over a period of two hours at 20°—25·C. After agitating for another 30 minutes, the solids which form are collected on a filter and washed with water. The solids are dried and crystallized further by heating in dimethylformamide at 140°—150°C. The resulting green shade yellow pigment has the formula

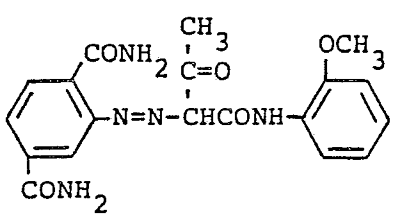

The pigment is dispersed in a thermoplastic acrylic paint where it displays excellent lightfastness and bleedfastness. The pigment is incorporated into high density polyethylene where it displays good heat stability and lightfastness.

Example 3

Concentrated hydrochloric acid (5.0 ml) is added over 75 min. to a mixture of 11.7 g acetoacetamidobenzimidazolone 6.8 g anthranilamide, 50 ml of dimethylacetamide, 30 ml of water and 11 ml of 30% aqueous sodium nitrite. The pH is 7.4 initially and slowly falls to 4.9 at the end of the hydrochloric acid addition. The reaction mass is agitated for an additional one hour. Water, 100 ml, is added and the solids are collected on a filter, washed with water and dried. The dried solids are crystallized further by heating in dimethylformamide at 140—150°C. The resulting red shade yellow pigment has the formula

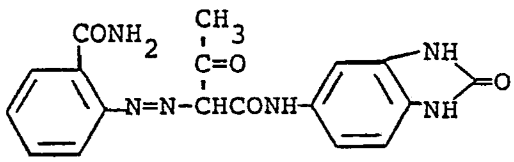 .

This α phase displays an X-ray diffraction pattern, 2θ being 4—30, as shown below:

| Interplanar spacing $10^{-10}$ m(Å) | (Intensity)* |
|---|---|
| 12.98 | (w) |
| 11.87 | (w) |
| 9.51 | (m) |
| 6.63 | (s) |
| 5.83 | (m) |
| 5.25 | (m) |
| 4.82 | (m) |
| 4.62 | (m) |
| 4.47 | (w) |
| 4.26 | (m) |
| 4.03 | (m) |
| 3.92 | (w) |
| 3.70 | (m) |
| 3.55 | (s) |
| 3.40 | (m) |
| 3.23 | (s) |
| 3.13 | (m) |
| 3.01 | (m) |

* where (w) equals weak; (m) equals moderate; and (s) equals strong.

If the crude pigment is heated in dimethylformamide at 75—100°C, a second red shade yellow phase (designated β) is obtained. The β phase displays an X-ray diffraction as follows:

| Interplanar spacing $10^{-10}$ m (Å) | (Intensity)* |
|---|---|
| 9.96 | (s) |
| 8.54 | (m) |
| 7.98 | (w) |
| 7.48 | (w) |
| 6.76 | (m) |
| 5.86 | (w) |
| 5.11 | (s) |
| 4.95 | (m) |
| 4.59 | (m) |
| 4.31 | (m) |
| 4.11 | (m) |
| 3.97 | (w) |
| 3.84 | (m) |
| 3.68 | (m) |
| 3.47 | (s) |
| 3.40 | (s) |
| 3.35 | (s) |
| 3.05 | (m) |

*where (w) equals weak; (m) equals moderate; and (s) equals strong. The pigment is dispersed in a thermoplastic acrylic paint where it displays excellent lightfastness.

Example 4

To a mixture of 4.5 g aminoterephthalamide, 7.0 g 2-hydroxy-3-naphth-o-anisidide, 45 ml dimethylformamide, 10 ml pyridine, 30 ml glacial acetic acid and 30 ml water is slowly added 5.5 ml aqueous sodium nitrite over a period of two hours at 20°—25°C. After agitating for an additional hour, the solids which form are collected on a filter and washed with water. The solids are crystallized by heating in dimethylformamide at 150°C to yield a bright red pigment of the formula

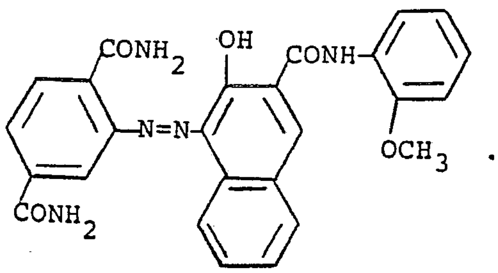

The pigment is dispersed in a thermoplastic acrylic lacquer wherein it exhibits excellent lightfastness and bleedfasteness.

Example 5

To a mixture of 6.0 g 5-acetoacetamidobenzimidazolone, 4.5 g 2-amino-5-chlorobenzamide, 30 ml glacial acetic acid, 5 ml pyridine and 30 ml water is slowly added 5.5 ml 30% aqueous sodium nitrite over a period of two hours at 20°—25°C. After stirring an additional 30 minutes, the reaction mass is filtered and the solids which formed washed with water. The dry solids are crystallized by heating at 145°C in dimethylformamide to form a bright yellow pigment of the formula

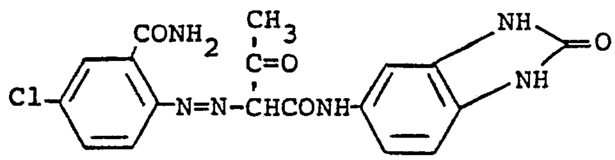

.

The pigment is dispersed in a thermoplastic acrylic lacquer wherein it displays excellent lightfastness and bleedfastness.

Example 6

Pyridine is added to a mixture of 4.5 g aminoterephthalamide, 4.4 g 3-methyl-1-phenyl-2-pyrazoline-5-one, 40 ml dimethylformamide, 30 ml water and 30 ml acetic acid to raise the pH to 3.5. Sodium nitrite (5.5 ml of a 30% aqueous solution) is slowly added over a two hour period at 20°—25°C. Additional water is added to maintain a fluid reaction mass. Additional acetic acid is added to maintain the pH at 3.5 to 4.0. The solids which form are collected on a filter and washed with water. The resulting pigment is crystallized further by heating in water at 100°C for one hour to provide a yellow pigment having the formula

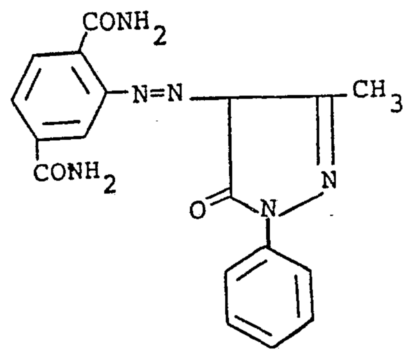

.

The pigment is dispersed in a thermoplastic acrylic lacquer wherein it displays excellent lightfastness and bleedfastness.

Example 7

Pyridine is added to a mixture of 5.23 g p-chlorophenylmethylpyrazolone, 3.40 g anthranilamide, 50 ml dimethylformamide, 30 ml glacial acetic acid and 30 ml water to adjust the pH to 3.7. Sodium nitrite (5.5 ml of 30% aqueous solution) is slowly added to the mixture over a period of two hours at 20°—25°C. Additional acetic acid is added to maintain the pH at 3.7 to 4.2. Additional water is added to fluidize the reaction mass. After agitating an additional 30 minutes the reaction mass is filtered to recover the solids which form. The solids are dried and crystallized further by heating in dimethylformamide at 140°—145°C to yield a pigment of the formula:

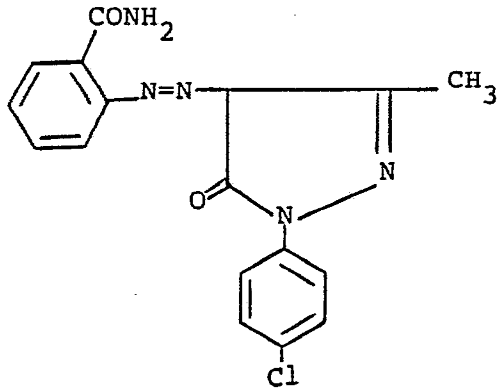

The pigment is dispersed in a thermoplastic acrylic lacquer wherein it displays outstanding lightfastness and good bleedfastness.

Example 8

To a mixture of 4.5 g of 2-amino-5-chlorobenzamide, 5.2 g p-chlorophenylmethylpyrazolone, 30 ml dimethylformamide, 30 ml glacial acetic acid, 2 ml pyridine and 30 ml water is slowly added 5.5 ml 30% aqueous sodium nitrite over a period of two hours at 20°—25°C. The pigment which forms is filtered washed with water and dried. The pigment is recrystallized from dimethylformamide to yield a pigment of the formula:

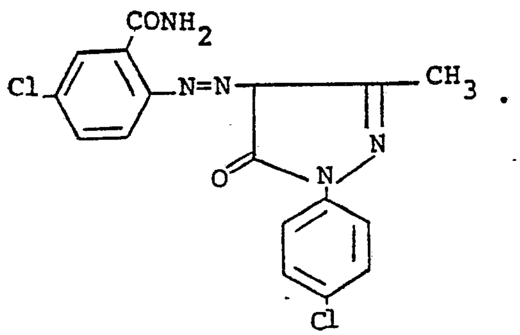

Example 9

To a mixture of 4.5 g aminoisophthalamide, 4.4 g methylphenylpyrazolone, 30 ml glacial acetic acid, 5 ml pyridine, 30 ml water and 25 ml dimethylformamide is slowly added 5.5 ml 30% aqueous sodium nitrite over a period of two hours at 20°—25°C. The resulting pigment is isolated and recrystallized from dimethylformamide to yield a yellow pigment of the formula

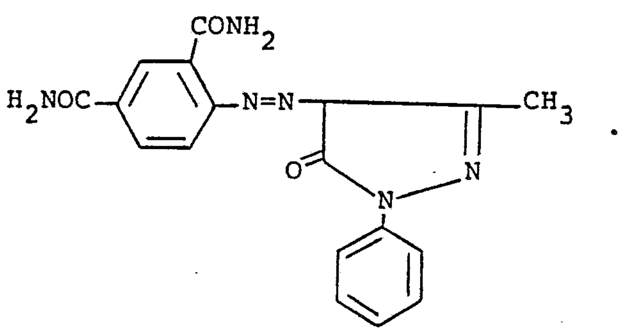

The pigment is dispersed in a thermoplastic acrylic lacquer wherein it displays very good lightfastness.

Example 10

To a mixture of 5.4 g of 5-nitroanthranilamide, 6.6 g of acetoaceto-o-anisidide, 25 ml of dimethylacetamide, 25 ml of acetic acid and 50 ml of water was added 6 ml of 5 N aqueous sodium nitrite over a 2.5 hour period at 20 to 25°C. During the addition of the sodium nitrite solution the pH of the mixture was maintained at 2 to 2.5 by the addition of 10.8 g of 85% phosphoric acid. After the addition of the sodium

nitrite solution was complete the mixture was stirred for an additional hour and filtered. The solids were washed with water and dried. The resulting green shade yellow pigment was obtained in good yield. The pigment has the following formula:

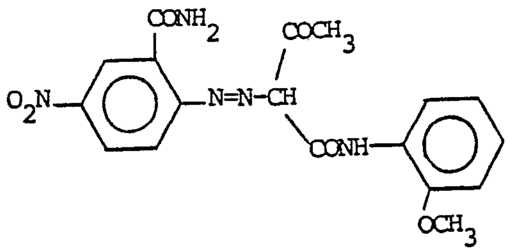

This phase, designated as the α phase, displays an X-ray diffraction pattern, 2θ being 4—30, as shown below:

| Interplanar spacing $10^{-10}$ m (Å) | (Intensity)* |
|---|---|
| 14.75 | (w) |
| 13.19 | (s) |
| 11.15 | (m) |
| 8.96 | (m) |
| 7.43 | (m) |
| 6.57 | (m) |
| 5.94 | (w) |
| 5.58 | (m) |
| 4.96 | (w) |
| 4.94 | (w) |
| 4.42 | (m) |
| 4.18 | (w) |
| 4.03 | (m) |
| 3.87 | (w) |
| 3.79 | (w) |
| 3.78 | (w) |
| 3.60 | (m) |
| 3.49 | (m) |
| 3.27 | (s) |
| 3.05 | (w) |
| 3.03 | (w) |

* where (w) equals weak; (m) equals moderate; and (s) equals strong.

The pigment can be further crystallized by warming in dimethylformamide to give a red shade yellow pigment. This red shade yellow, designated as the β phase, displays an X-ray diffraction pattern as follows:

| Interplanar spacing $10^{-10}$ m (Å) | (Intensity)* |
|---|---|
| 15.79 | (m) |
| 7.80 | (s) |
| 6.68 | (w) |
| 6.05 | (w) |
| 5.90 | (w) |
| 5.54 | (w) |
| 4.47 | (w) |
| 4.44 | (w) |
| 4.34 | (w) |
| 3.94 | (w) |
| 3.88 | (w) |
| 3.52 | (w) |
| 3.44 | (m) |
| 3.38 | (m) |
| 3.32 | (w) |
| 3.29 | (w) |
| 3.18 | (w) |
| 3.17 | (w) |
| 3.10 | (w) |
| 3.03 | (w) |

* where (w) equals weak; (m) equals moderate; and (s) equals strong.

Examples 11—47

In a similar manner the following pigments are prepared and evaluated in Table I.

TABLE I

| Ex. | Pigment Formula | Color | Bleed-fastness | Light-fastness |
|---|---|---|---|---|
| 11 | 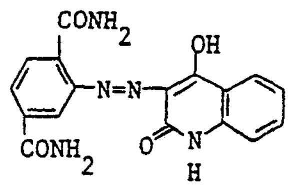 | yellow | good | good |
| 12 | 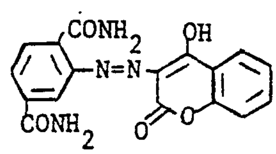 | yellow | good | good |
| 13 | 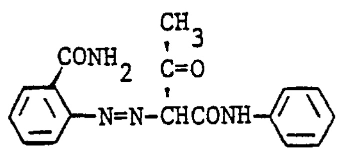 | green shade yellow | fair | Very good |
| 14 | 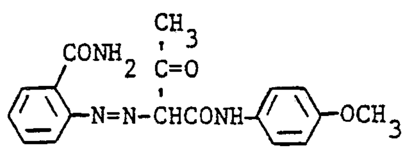 | yellow | fair | Very good |
| 15 | 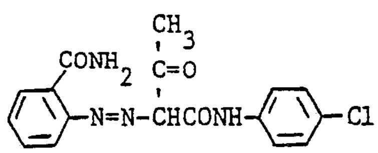 | green shade yellow | fair | fair |
| 16 | 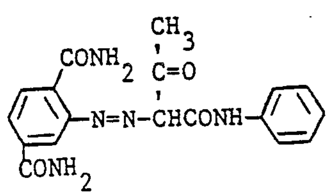 | green shade yellow | good | good |

TABLE I (Continued)

| Ex. | Pigment Formula | Color | Bleed-fastness | Light-fastness |
|---|---|---|---|---|
| 17 | 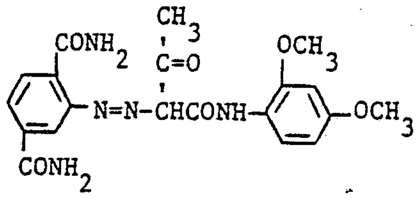 | red shade yellow | Very good | Very good |
| 18 | 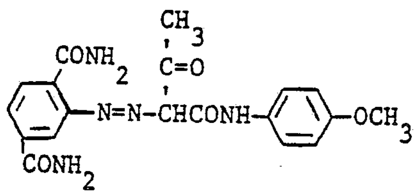 | yellow | good | good |
| 19 | 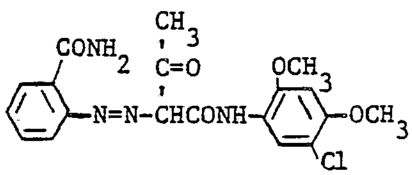 | yellow | good | Very good |
| 20 | 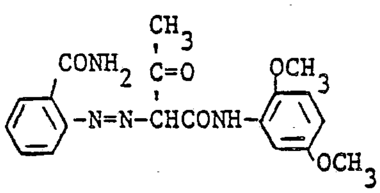 | yellow | fair | good |
| 21 | 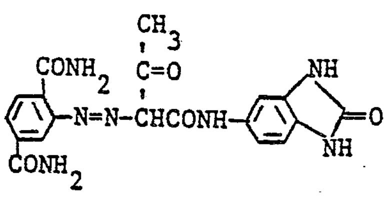 | red shade yellow | good | good |
| 22 | 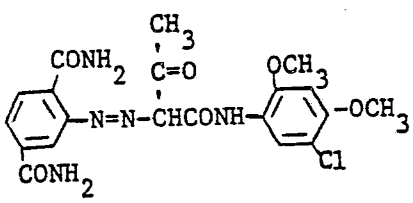 | yellow | Very good | Very good |

TABLE I (Continued)

| Ex. | Pigment Formula | Color | Bleed-fastness | Light-fastness |
|---|---|---|---|---|
| 23 | 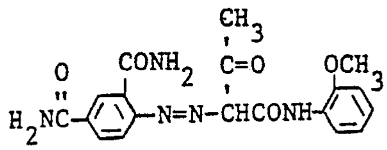 | yellow | good | good |
| 24 | 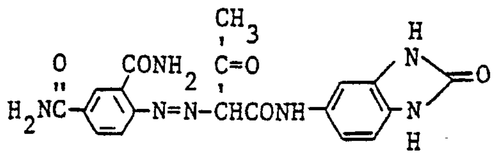 | red shade yellow | good | good |
| 25 | 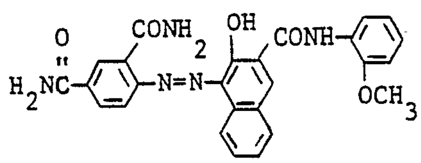 | red | good | fair |
| 26 | 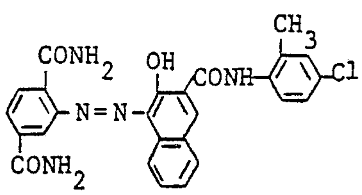 | red | good | good |
| 27 | 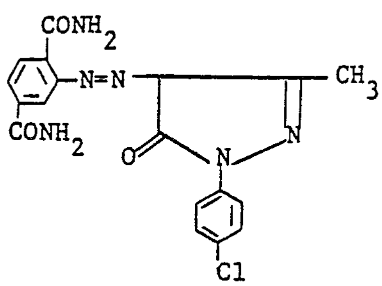 | red shade yellow | Very good | Very good |
| 28 | 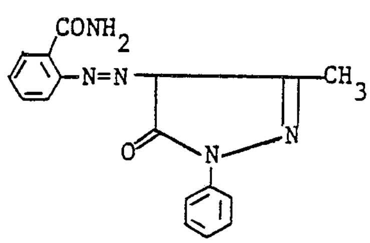 | red shade yellow | good | Very good |

TABLE I (Continued)

| Ex. | Pigment Formula | Color | Bleed-fastness | Light-fastness |
|---|---|---|---|---|
| 29 | 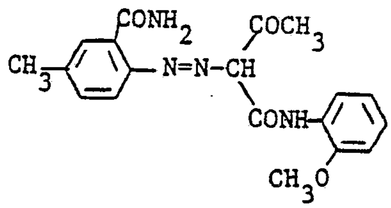 | green shade yellow | good | Very good |
| 30 | 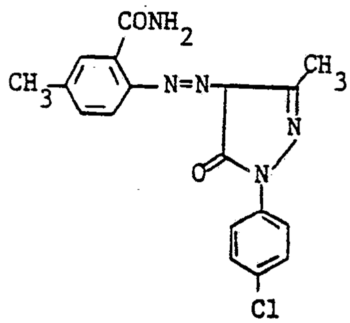 | red shade yellow | good | Very good |
| 31 | 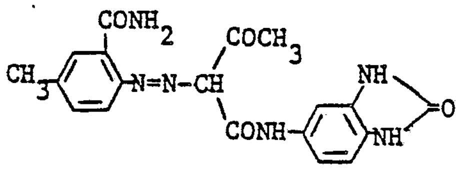 | yellow | Very good | Very good |
| 32 | 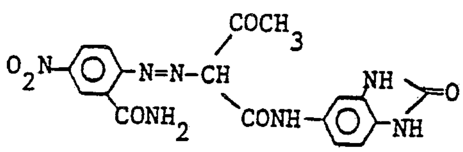 | Brownish yellow | Very good | good |
| 33 | 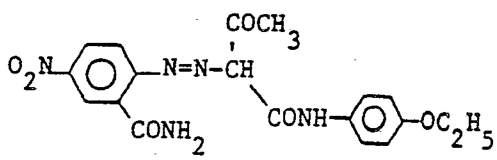 | Orange | good | – |
| 34 | 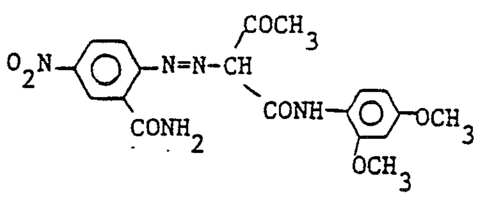 | Orange | Very good | Very good |

TABLE I (Continued)

| Ex. | Pigment Formula | Color | Bleed-fastness | Light-fastness |
|---|---|---|---|---|
| 35 | 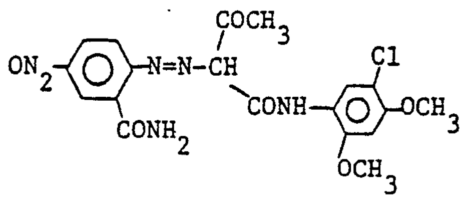 | Reddish brown | Very good | Very good |
| 36 | 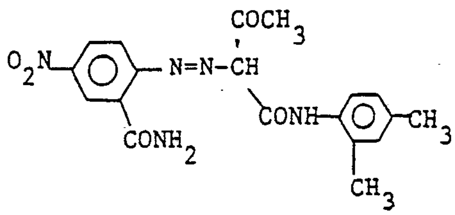 | Red Shade | good | good |
| 37 | 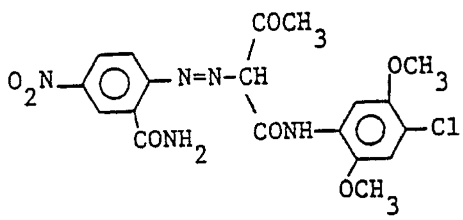 | Orange | Very good | good |
| 38 | 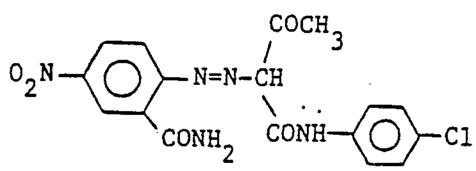 | Green Shade yellow | fair | fair |
| 39 | 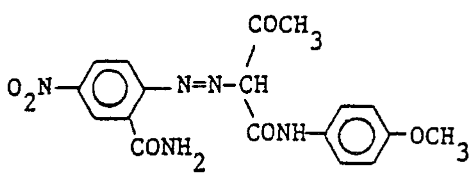 | Orange | good | Very good |
| 40 | 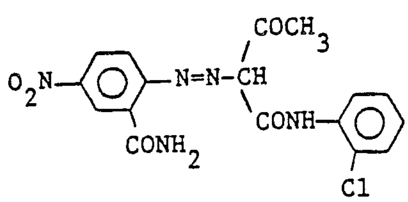 | Green shade yellow | good | fair |

TABLE I (Continued)

| Ex. | Pigment Formula | Color | Bleed-fastness | Light-fastness |
|---|---|---|---|---|
| 41 | 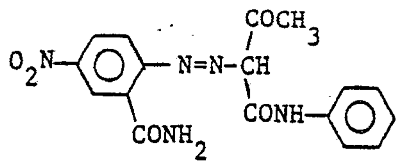 | Green shade yellow | good | fair |
| 42 | 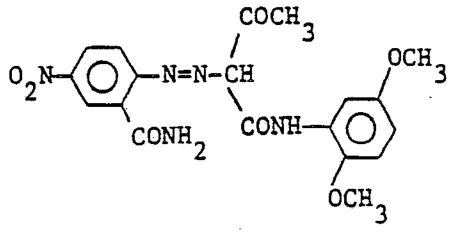 | Orange | good | fair |
| 43 | 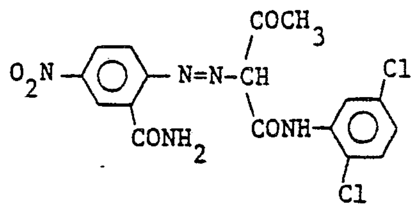 | Green shade yellow | Very good | fair |
| 44 | 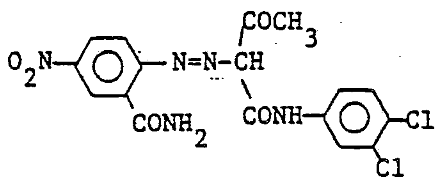 | Green shade yellow | good | good |
| 45 | 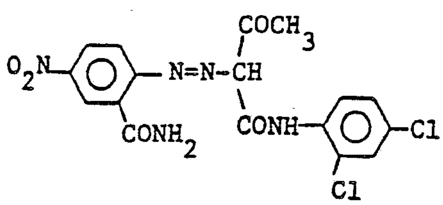 | Green shade yellow | good | good |
| 46 | 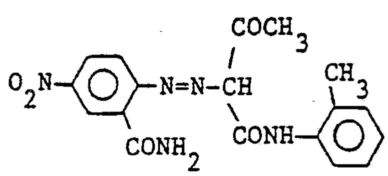 | Green shade yellow | fair | fair |
| 47 | 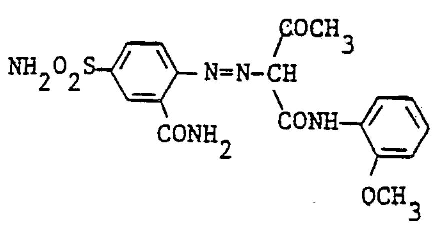 | Yellow | good | Very good |

**Claims**

1. A process for producing an azo pigment having the formula

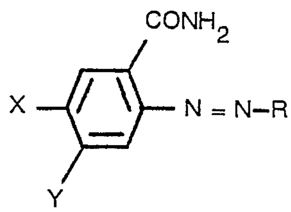

wherein X and Y are the same or different and are selected from the group consisting of —H, —$R^1$, —$OR^1$, —Cl —$CONH_2$, —$NO_2$ and —$SO_2NH_2$ where —$R^1$ is lower alkyl; and —R is

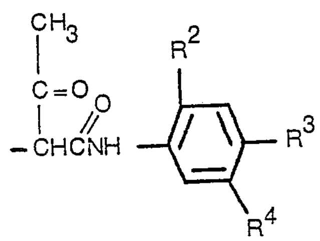
,

where —$R^2$, —$R^3$ and —$R^4$ are the same or different and are selected from the group consisting of —H, —$OR^1$, —$R^1$, and —Cl;

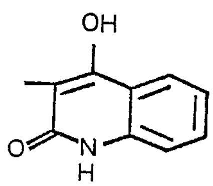
and
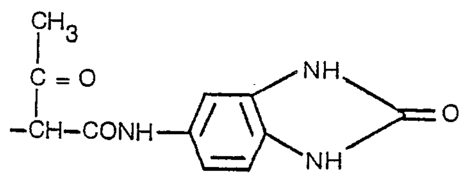
,

comprising an in situ diazotization and coupling reaction wherein an anthranilamide of the formula

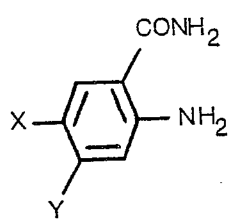

wherein X and Y are defined as above; is reacted with a coupler, RH, wherein R is defined as above, in the presence of a diazotization agent and an acid in a liquid medium comprising of water and, optionally, a polar organic solvent at a pH from 1.0 to 7.0 at a temperature from 0°C to 100°C.

2. The process of Claim 1 wherein —X is —$NO_2$ and —Y is —H.

3. The process of Claim 1 wherein —R is

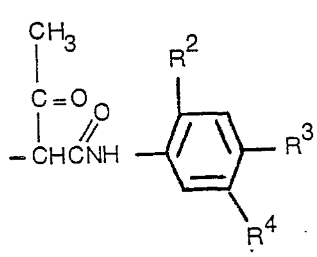
,

4. The process of Claim 1 wherein —X and —Y are —H.
5. The process of Claims 1 or 4 wherein —R is

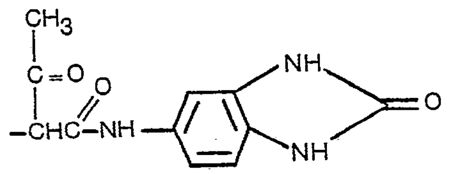 .

6. The prcess of Claim 1 wherein —Y is —$CONH_2$ and —X is —H.
7. The process of Claims 1 to 6 wherein said liquid medium contains a polar organic solvent.
8. The process of Claims 1 to 7 wherein the reaction is carried out at from 10° to 50°C.

**Revendications**

1. Procédé de préparation d'un pigment azoïque ayant la formule:

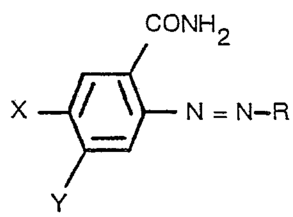

dans laquelle X et Y sont semblables ou différents et sont choisis dans le groupe comprenant —H, —$R^1$, $OR^1$, —Cl, —$CONH_2$, —$NO_2$ et —$SO_2NH_2$ où —$R^1$ est un groupe alkyle inférieur; et —R est:

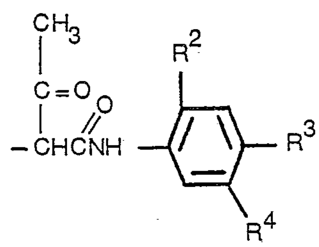 ,

où —$R^2$, —$R^3$ et —$R^4$ sont semblables ou différents et sont choisis dans le groupe comprenant —H, —$OR^1$, —$R^1$ et —Cl;

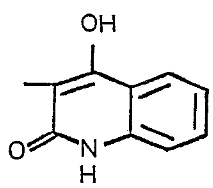 et 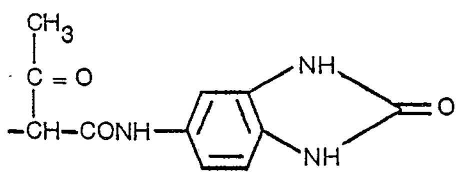 ,

comprenant une réaction in situ de diazotation et de copulation dans laquelle on fait réagir un anthranilamide de le formule:

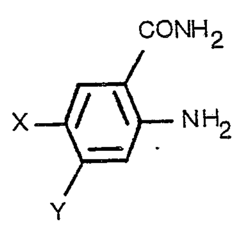

dans laquelle X et Y sont tels que définis ci-dessus, avec un copulant, RH, dans lequel r est tel que défini cidessus, en présence d'un agent de diazotation et d'un acide, dans un milieu liquide comprenant de l'eau

et, facultativement, un solvant organique polaire, à un pH de 1,0 à 7, 0, à une température de 0 à 100°C.

2. Procédé selon la revendication 1, dans lequel —X et —$NO_2$ et —Y est —H.

3. Procédé selon la revendication 1, dans lequel —R est

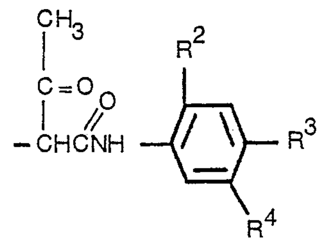

,

4. Procédé selon la revendication 1, dans lequel —X et —Y sont —H.

5. Procédé selon la revendication 1 ou 4, dans lequel —R est

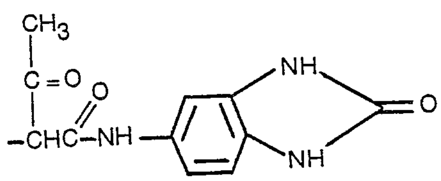

.

6. Procédé selon la revendication 1, dans lequel —Y est —$CONH_2$ et —X est —H.

7. Procédé selon les revendications 1 à 6, dans lequel le milieu liquide contient un solvant organique polaire.

8. Procédé selon les revendications 1 à 7, dans lequel on conduit la réaction à 10 à 50°C.

**Patentansprüche**

1. Verfahren zur Herstellung eines Azopigments der Formel

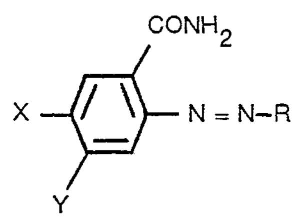

worin X und Y gleich oder verschieden sind und aus einer aus —H, —$R^1$, —$OR^1$, —Cl, —$CONH_2$, —$NO_2$ und —$SO_2NH_2$ bestehenden Gruppe ausgewählt sind, wobei —$R^1$ für Niederalkyl steht; und —R für

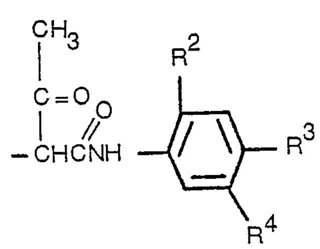

,

worin —$R^2$, —$R^3$ und —$R^4$ gleich oder verschieden sind und aus einer aus —H, —$OR^1$, —$R^1$ und —Cl bestehenden Gruppe ausgewählt sind;

für

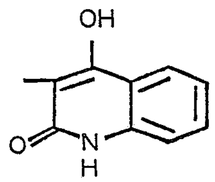 oder 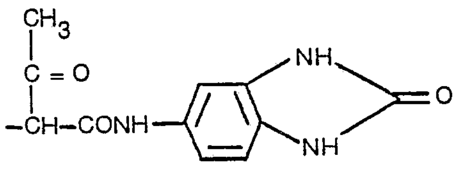 ,

steht, umfassend eine in situ-Diazotierungs- und Kupplungs- reaktion, worin ein Anthranilamid der Formel

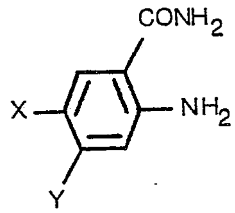

worin X und Y wie oben definiert sind, mit einem Kuppler, RH, worin R wie oben definiert ist, in Gegenwart eines Diazotierungsmittels und einer Säure in einem flüssigen Medium, umfassend Wasser und, im gewünschten Falle, ein polares organisches Lösungsmittel, bei einem pH-Wert von 1,0 bis 7,0 bei einer Temperatur von 0°C bis 100°C umgesetzt wird.

2. Verfahren nach Anspruch 1, worin —X für —$NO_2$ steht und —Y für —H steht.

3. Verfahren nach Anspruch 1, worin —R für

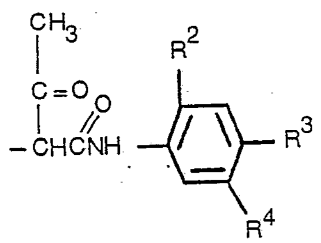 ,

steht.

4. Verfahren nach Anspruch 1, worin —X und —Y für —H stehen.

5. Verfahren nach Anspruch 1 oder 4, worin —R für

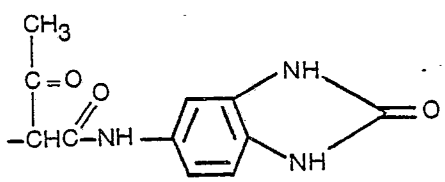 .

steht.

6. Verfahren nach Anspruch 1, worin —Y für —$CONH_2$ und —X für —H stehen.

7. Verfahren nach den Ansprüchen 1 bis 6, worin das genannte flüssige Medium ein polares organisches Lösungsmittel enthält.

8. Verfahren nach den Ansprüchen 1 bis 7, worin die Umsetzung bei einer Temperatur von 10° bis 50°C ausgeführt wird.